# EUROPÄISCHE PATENTSCHRIFT

(11) **EP 2 301 680 B1**
(45) Veröffentlichungstag und Bekanntmachung des Hinweises auf die Patenterteilung: **06.11.2013**
(21) Anmeldenummer: 10176631.9
(22) Anmeldetag: 14.09.2010
(51) Int. Cl.: B07B 1/12, B07B 1/46, B01D 29/01

(54) **Spaltsieb und Haltelehre für dessen Herstellung**
Slot sieve and holder for producing same
Tamis à fente et aide à la retenue pour sa fabrication

(30) Priorität: 23.09.2009 DE 102009042357
(43) Veröffentlichungstag der Anmeldung: 30.03.2011
(73) Patentinhaber: Zöllner, Thorsten, 92318 Neumarkt / OPf. (DE)
(72) Erfinder: Zöllner, Thorsten, 92318 Neumarkt / OPf. (DE)
(74) Vertreter: Rau, Schneck & Hübner

(56) Entgegenhaltungen:
- EP-A1- 1 230 987
- WO-A1-00/25889
- DE-A1- 2 325 418
- DE-A1- 2 940 582
- DE-A1- 3 637 113

## Beschreibung

Die Erfindung betrifft ein Spaltsieb mit den im Oberbegriff des Patentanspruches 1 angegebenen Merkmalen.

Ein derartiges Spaltsieb ist durch offenkundige Vorbenutzung bekannt und weist üblicherweise eine Vielzahl von nebeneinander angeordneten Siebprofilen auf, die zwischen ihren Längsseiten jeweils einen Siebspalt bilden. Die Siebprofile sind dabei im Querschnitt trapezförmig ausgebildet, wobei zwischen den breiten Basisseiten der eigentliche Siebspalt ausgebildet ist.

Die einzelnen Siebprofile sind durch quer dazu verlaufende Trägerprofile miteinander verbunden, auf denen die Siebprofile mit ihren Schmalseiten, wie sie durch den trapezförmigen Querschnitt gebildet werden, befestigt sind. Diese quer verlaufenden Trägerprofile sind in der Regel unter die Profilstäbe geschweißt. Ein derartiges Sieb ist auch aus der EP 1 230 987 A1 oder der WO 00/25889 A1 bekannt, wobei die letztgenannte Druckschrift ein Spaltsieb zeigt, das auf der den Trägerprofilen abgewandten Seite der Siebprofile mit zusätlichen Stützleisten versehen ist.

Ferner sind so genannte Schling-Spalt-Siebe bekannt, bei denen die einzelnen Siebprofile in gewissen Abständen zu einer Öse geschlungen werden. In die miteinander fluchtenden Ösen nebeneinander liegender Siebprofile werden dann runde Trägerprofile eingeschoben. An ihren Enden können diese runden Querstäbe ohne weitere Armierung vernietet sein. Ferner ist es möglich, die Querstäbe zu verschrauben und zu verschweißen. Schließlich können derartige Schling-Spalt-Siebe an ihren parallel zu den Siebprofilen verlaufenden Seiten mit einer Randschiene zur Armierung versehen werden, die mit den Querstäben verschraubt und verschweißt ist.

Als Fundstelle für derartige offenkundige Vorbenutzungen kann beispielsweise die Internetseite mit der URL-Adresse
"http://www.heinlehmann.de/cgi-bin/cmsshow.exe?mode=start&u_3x z=&p_3xz=&gowd=&B_ID=10&R_ID=61&UR_ID=219&start=urubrik"
angegeben werden.

Problematisch bei beiden vorgenannten Varianten von vorbekannten Spaltsieben ist die Tatsache, dass die quer verlaufenden Trägerprofile außerhalb der von den Siebprofilen aufgespannten Flächenebene verlaufen. Da solche Spaltsiebe nun oftmals in einer um eine Achse gekrümmten Konfiguration als sogenannte Siebmulden eingesetzt werden, ergibt sich aus dem Vorhandensein der beschriebenen Trägerprofile die Schwierigkeit, dass solche Siebe nur um eine quer zu den Trägerprofilen verlaufende Achse gekrümmt werden können. Eine Biegung um Krümmungsachsen, die parallel zu den Längsachsen der Trägerprofile verlaufen, ist praktisch nicht möglich, da die üblicherweise verwendeten Biegewalzenpaare in Walzrichtung keine einheitliche Dicke der Spaltsiebe aufgrund der abstehenden Trägerprofile vorfinden.

Ein weiterer Nachteil der bekannten Spaltsiebe liegt darin, dass sich bei einem Biegen des Siebes in der Regel die Spaltweiten ändern, da die Trägerprofile von der eigentlichen, von den Siebspalten aufgespannten Siebebene des Spaltsiebes beabstandet sind.

Ausgehend von der geschilderten Problematik des Standes der Technik liegt der Erfindung die Aufgabe zugrunde, ein Spaltsieb der gattungsgemäßen Art so zu verbessern, dass ein problemloses Biegen bei konstanten Spaltbreiten ermöglicht wird.

Diese Aufgabe wird durch die im Kennzeichnungsteil des Anspruches 1 angegebenen Merkmale gelöst, wonach die Trägerprofile in jeweils miteinander fluchtenden Aufnahmenuten in den Siebprofilen derart angeordnet sind, dass die den Siebprofilen abgewandten Außenseiten der Trägerprofile in einer Ebene mit den Spalt- oder davon abgewandten Unterseiten der Siebprofile liegen.

Aufgrund dieser Positionierung der Trägerprofile liegen diese innerhalb der von den Spalt- oder davon abgewandten Unterseiten der Siebprofile aufgespannten Hüllebene, so dass die Spaltsiebe auf ihren beiden Flachseiten ebene Umrissflächen aufweisen. Damit können problemlos Biegewerkzeuge in Form von Walzenpaaren daran angreifen und die Spaltsiebe entsprechend um quasi beliebig orientierte Krümmungsachsen in eine muldenförmige Konfiguration umformen. Ein weiterer Vorteil der erfindungsgemäßen Spaltsiebe liegt in der Tatsache, dass das Verhältnis der offenen Fläche zur Gesamtfläche des Siebes gegenüber herkömmlichen schlitzgefrästen Spaltsieben deutlich verbessert werden kann. Eine Erhöhung von z. B. 9 % auf 17 % offener Flächenanteil ist typisch.

Durch die Ausgestaltung nach Anspruch 2 sind die Siebprofile im Bereich ihrer Spaltseiten durch die Trägerprofile fixiert, so dass unabhängig von einer eingearbeiteten Krümmung die Siebspalte eine exakte, vorkonfektionierte Breite beibehalten.

Der Robustheit der Siebe dient auch die Weiterbildung der Spaltsiebe gemäß Anspruch 4.

Die Ansprüche 4 und 5 kennzeichnen einen bevorzugten Spaltbreitenbereich für die Siebspalte.

Die Ansprüche 6 und 7 einerseits sowie 8 und 9 andererseits beziehen sich auf die unterschiedliche Ausbildung der Sieb- und Trägerprofile als Drahtprofile aus Metall oder als Kunststoffprofile. Die entsprechende Auswahl erfolgt im Hinblick auf den Einsatzzweck des jeweiligen Siebes, wobei bei einer Verwendung von metallenen Drahtprofilen in besonders rationeller Weise mit einer Rollenschweißung die Verbindung der Profilelemente vorgenommen werden kann.

Bei der alternativen Verwendung von Kunststoffmaterialien für Sieb- und Trägerprofile sind die damit hergestellten Spaltsiebe leicht und korrosionsfest. Ferner kann hier eine Ultraschallschweißung der Profilelemente als besonders elegante Fügetechnik eingesetzt werden. Als Kunststoffe kommen beispielsweise in Frage PA, PE, PP, PPS und ABS.

Die Patentansprüche 10 und 11 kennzeichnen bevorzugte Weiterbildungen, bei denen zwischen den Siebprofilen schmalere, lamellenförmige Zwischenstege angeordnet sind. Diese sind vorzugsweise als Flachbleche ausgebildet, deren schmale Längsseiten in einer Ebene mit den Spaltseiten der Siebprofile liegen. Mit Hilfe dieser Zwischenstege kann das Verhältnis der offenen Fläche des Siebes zur Gesamtfläche nochmals weiter verbessert werden. Der Grund hierfür liegt darin, dass die schmalen Längsseiten der Zwischenstege deutlich schmaler als die Basisseiten der Siebprofile sind, so dass lediglich durch den geringen Flächenbedarf der Stegschmalseiten eine Verdoppelung der Siebspalte und damit der offenen Fläche des Siebes erzielt werden kann.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine perspektivische Ansicht eines Spaltsiebes,
- Fig. 2: eine Ansicht aus Pfeilrichtung II gemäß Fig. 1,
- Fig. 3: eine perspektivische Detailvergrößerung der Einzelheit A gemäß Fig. 1,
- Fig. 4: einen schematischen Querschnitt durch eine Haltelehre zum Einsatz bei der Fertigung eines Spaltsiebes,
- Fig. 5 und 6: jeweils eine perspektivische Teilvergrößerungen analog Fig. 3 in zwei weiteren Ausführungsformen eines Spaltsiebes, und
- Fig. 7: eine perspektivische ausschnittsweise Ansicht eines Spaltsie- bes in einer weiteren Ausführungsform.

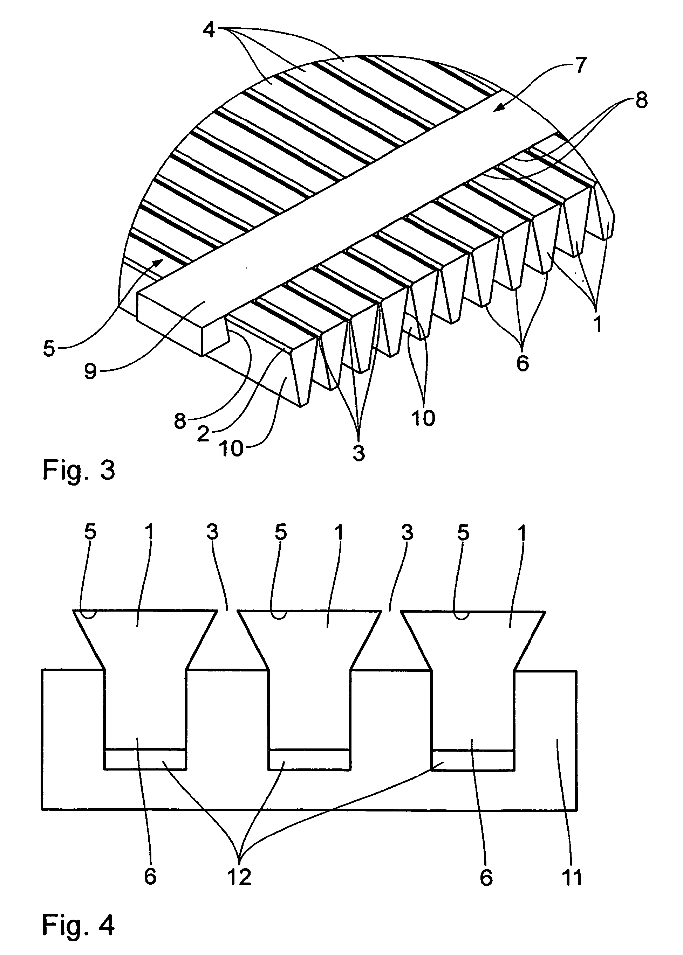

Wie aus den Zeichnungen deutlich wird, weist ein Spaltsieb eine Vielzahl von parallel nebeneinander angeordneten Siebprofilen 1 auf, wobei die Längsseiten 2 zweier benachbarter Siebprofile 1 jeweils einen Siebspalt 3 bilden. Wie insbesondere Fig. 3 deutlich macht, sind die einzelnen Siebprofile 1 im Querschnitt trapezförmig ausgestaltet, wobei die breiten Basisseiten 4 in einer gemeinsamen Ebene angeordnet sind und die Spaltseite 5 des jeweiligen Siebprofils 1 bzw. des Spaltsiebes selbst bilden.

Die Schmalseiten 6 der Siebprofile 1 bilden die Unterseite des Siebes.

Die Siebprofile 1 werden durch quer zu ihnen verlaufende Trägerprofile 7 zusammengehalten, die jeweils in miteinander fluchtenden Aufnahmenuten 8 in den Basisseiten 4 der Siebprofile 1 angeordnet sind. Die Kontur dieser Aufnahmenuten 8 entspricht dem flach-rechteckigen Querschnitt der Trägerprofile 1, so dass diese in die Siebprofile 1 eingelassen sind und mit ihren den Siebprofilen 1 abgewandten Außenseiten 9 in einer Ebene mit der Spaltseite 5 der Siebprofile 1 liegen. Drei solche Trägerprofile 7 sind über die Breite des Siebes verteilt parallel zueinander angeordnet.

Die einander zugewandten Flanken 10 der Siebprofile 1 bilden einen sich erweiternden Ablaufkanal für die zu reinigende Flüssigkeit.

Die Dimension der Siebspalte 3 liegt je nach Filteraufgabe beispielsweise zwischen einer Minimalbreite von etwa 1 µm bis zu einer Maximalbreite von etwa 10 mm.

Die Materialien der Sieb- und Trägerprofile 1, 7 sind beispielsweise geeignete Kunststoffmaterialien, wobei dann eine Verbindung der Profile durch Ultraschallschweißung erfolgen kann.

Eine übliche Ausbildung der Sieb- und Trägerprofile 1, 7 als Drahtprofile aus Metall ist ebenfalls denkbar. Dann bietet sich eine Rollenschweißung zur rationellen Verbindung der Siebkomponenten an.

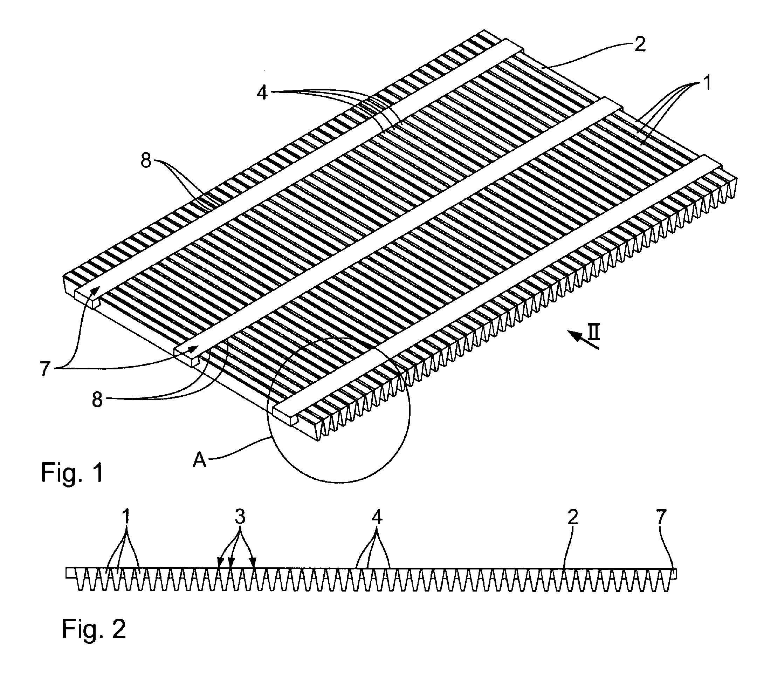

Fig. 4 zeigt einen schematischen Schnitt durch eine Haltelehre 11, wie sie bei der Fertigung eines Spaltsiebes gemäß den Fig. 1 bis 3 eingesetzt werden kann. Die Siebprofile 1 weisen lediglich in ihrem dem Siebspalt 3 zugewandten Bereich einen trapezförmigen Querschnitt auf, die Profilform geht dann in ein Rechteckprofil über. Die Haltelehre 11 selbst weist entsprechende Aufnahmen 12 für die einzelnen Siebprofile 1, die mit ihrem rechteckförmigen Querschnittsteil in die Aufnahmen 12 eingesteckt werden. Damit können die Siebprofile 1 sehr genau positioniert werden, so dass die Siebspalte 3 sehr schmal und eng tolerant, auch was die Breitenvariation des Siebspaltes 3 über seine Länge hinweg anbetrifft, gefertigt werden können.

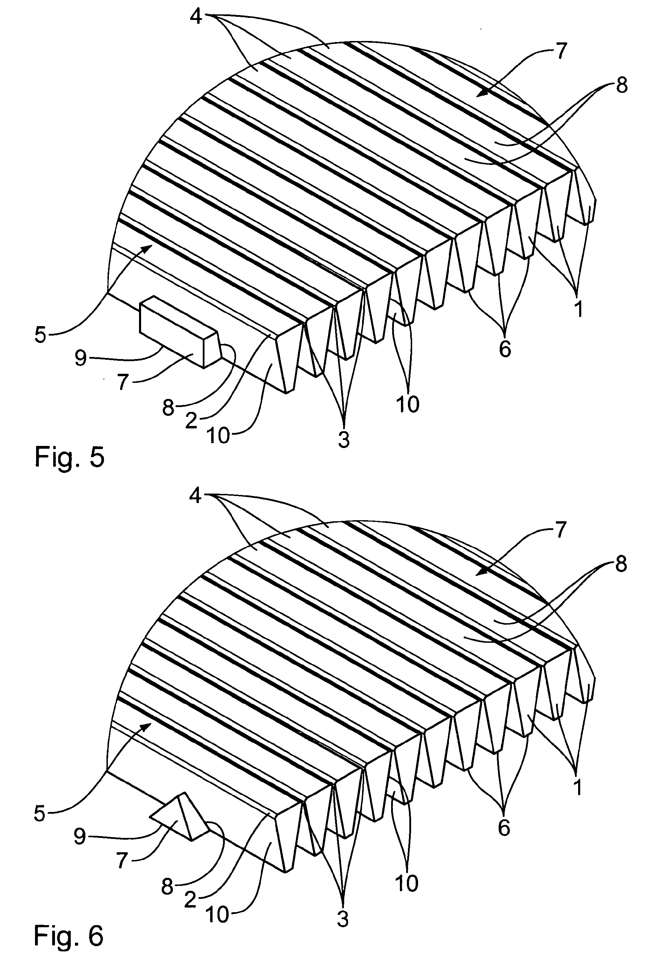

Bei dem in Fig. 5 gezeigten Ausführungsbeispiel eines Spaltsiebes sind die im Querschnitt analog der Ausführungsform gemäß Fig. 1 flach-rechteckigen Trägerprofile 7 nicht auf der Spaltseite 5 der Siebprofile 1, sondern in den davon abgewandten Unterseiten 6 wiederum in entsprechenden Aufnahmenuten 8 angeordnet. Die Außenseite 9 der Trägerprofile 7 liegt dabei wieder in einer Ebene fluchtend mit den schmalen Unterseiten 6 der Siebprofile 1.

Bei der in Fig. 6 gezeigten Ausführungsform sind die Trägerprofile 7 entsprechend an der Unterseite 6 der Siebprofile 1 angeordnet, ihre Querschnittsform ist allerdings nicht flach-rechteckig, sondern dreieckig. Entsprechend ist die Querschnittsform der in die Unterseite 6 der Siebprofile 1 eingefrästen Aufnahmenuten 8 dreieckig. Die die Außenseite 9 des Trägerprofils 7 bildende Basisseite ist auch hier in einer Ebene fluchtend mit den schmalen Unterseiten 6 der Siebprofile angeordnet.

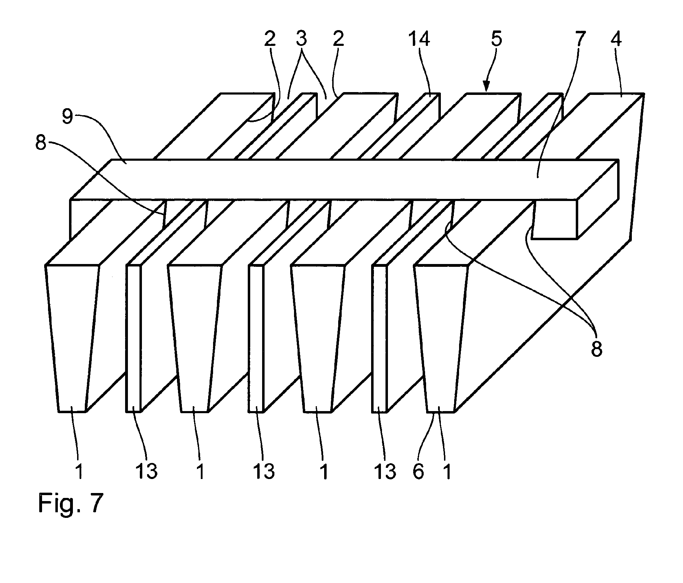

Die in Fig. 7 gezeigte Ausführungsform eines Spaltsiebes entspricht in ihrer Grundkonfiguration dem in Fig. 1 gezeigten Sieb mit im Querschnitt trapezförmigen Siebprofilen 1, wobei auf deren Spaltseite 5 in entsprechenden Aufnahmenuten 8 wiederum flach-rechteckige Trägerprofile 7 zur Halterung der Siebprofile 1 eingesetzt sind. Zwischen zwei benachbarten Siebprofilen 1 sind bei dieser Ausführungsform allerdings noch Zwischenstege 13 eingesetzt, deren Hauptebene quer zur Sieboberfläche verläuft und deren schmale Längsseiten 14 in einer Ebene mit den Spaltseiten 5 der Siebprofile 1 liegen. Diese lamellenförmigen Zwischenstege 13 werden ebenso durch die Trägerprofile 7 gehalten, die in entsprechenden Aufnahmenuten 8 in den Zwischenstegen 13 verlaufen. Durch das Einsetzen der Zwischenstege 13 werden jeweils zu den beiden benachbarten Siebprofilen 1 zwei Siebspalte 3 gebildet.

## Patentansprüche

1. Spaltsieb umfassend
- eine Vielzahl von nebeneinander angeordneten Siebprofilen (1), die zwischen ihren Längsseiten jeweils einen Siebspalt (3) bilden, und
- mindestens zwei, vorzugsweise mehrere, quer zu den Siebprofilen (1) verlaufende Trägerprofile (7), auf denen die Siebprofile (1) befestigt sind,
**dadurch gekennzeichnet, dass**
- die Trägerprofile (7) in jeweils miteinander fluchtenden Aufnahmenuten (8) in den Siebprofilen (1) derart angeordnet sind, dass die den Siebprofilen (1) abgewandten Außenseiten (9) der Trägerprofile (7) in einer Ebene mit den Spalt- oder davon abgewandten Unterseiten (5, 6) der Siebprofile (1) liegen, und
- die Siebprofile (1) zumindest in ihrem dem Siebspalt (3) zugewandten Profilbereich jeweils einen trapezförmigen Querschnitt aufweisen, wobei ihre breiten Basisseiten (4) die Spaltseite (5) des jeweiligen Siebprofils (1) bilden.

2. Spaltsieb nach Anspruch 1, **dadurch gekennzeichnet, dass** die Außenseiten der Trägerprofile (7) bündig mit den Spaltseiten (5) der Siebprofile (1) angeordnet sind.

3. Spaltsieb nach einem der vorgenannten Ansprüche, **dadurch gekennzeichnet, dass** die Trägerprofile (7) im Querschnitt jeweils flachrechteckig oder dreieckig ausgebildet sind, wobei eine ihrer Breitseiten die Außenseite (9) des jeweiligen Trägerprofils (7) bildet.

4. Spaltsieb nach einem der vorgenannten Ansprüche, **dadurch gekennzeichnet, dass** die Minimalbreite der Siebspalten (3) jeweils etwa 1 µm beträgt.

5. Spaltsieb nach einem der vorgenannten Ansprüche, **dadurch gekennzeichnet, dass** die Maximalbreite der Siebspalten (3) jeweils etwa 10 mm beträgt.

6. Spaltsieb nach einem der vorgenannten Ansprüche, **dadurch gekennzeichnet, dass** Sieb- und Trägerprofile (1, 7) jeweils als Drahtprofile aus Metall ausgebildet sind.

7. Spaltsieb nach Anspruch 6, **dadurch gekennzeichnet, dass** die Siebund Trägerprofile (1, 7) durch Rollenschweißung miteinander verbunden sind.

8. Spaltsieb nach einem der vorgenannten Ansprüche, **dadurch gekennzeichnet, dass** Sieb- und Trägerprofile (1, 7) jeweils als Kunststoffprofile ausgebildet sind.

9. Spaltsieb nach Anspruch 8, **dadurch gekennzeichnet, dass** die Siebund Trägerprofile (1, 7) durch Ultraschallschweißung miteinander verbunden sind.

10. Spaltsieb nach einem der vorgenannten Ansprüche, **dadurch gekennzeichnet, dass** zwischen den Siebprofilen (1) schmalere, lamellenförmige Zwischenstege (13) angeordnet sind, die durch die Trägerprofile (1, 7) gehalten sind und mit dem jeweils benachbarten Siebprofil (1) einen Siebspalt (3) bilden.

11. Spaltsieb nach Anspruch 10, **dadurch gekennzeichnet, dass** die Zwischenstege (13) als Flachbleche ausgebildet sind, deren schmale Längsseiten (14) in einer Ebene mit den Spaltseiten (5) der Siebprofile (1) liegen.

## Claims

1. Slot sieve comprising
- a plurality of sieve profiles (1) arranged next to one another, which in each case form a sieve slot (3) between their longitudinal sides, and
- at least two, preferably a plurality of carrier profiles (7), which extend transverse to the sieve profiles (1) and on which the sieve profiles (1) are fastened,
**characterised in that**
- the carrier profiles (7) are arranged in receiving grooves (8), which respectively align with one another, in the sieve profiles (1) in such a way that the outsides (9) of the carrier profiles (7) opposite to the sieve profiles (1) are located in a plane with the slot sides or lower sides (5, 6) opposite therefrom of the sieve profiles (1), and
- the sieve profiles (1) have a respective trapezoidal cross section, at least in their profile region facing the sieve slot (3), their wide base sides (4) forming the slot side (5) of the respective sieve profile (1).

2. Slot sieve according to claim 1, **characterised in that** the outsides of the carrier profiles (7) are arranged flush with the slot sides (5) of the sieve profiles (1).

3. Slot sieve according to any one of the aforementioned claims, **characterised in that** the carrier profiles (7) are in each case flat-rectangular or triangular in cross section, one of their wide sides forming the outside (9) of the respective carrier profile (7).

4. Slot sieve according to any one of the aforementioned claims, **characterised in that** the minimum width of the sieve slots (3) is in each case about 1 µm.

5. Slot sieve according to any one of the aforementioned claims, **characterised in that** the maximum width of the sieve slots (3) is in each case about 10 mm.

6. Slot sieve according to any one of the aforementioned claims, **characterised in that** the sieve and carrier profiles (1, 7) are in each case configured as wire profiles made of metal.

7. Slot sieve according to claim 6, **characterised in that** the sieve and carrier profiles (1, 7) are connected to one another by roller welding to one another.

8. Slot sieve according to any one of the aforementioned claims, **characterised in that** the sieve and carrier profiles (1, 7) are in each case configured as plastics material profiles.

9. Slot sieve according to claim 8, **characterised in that** the sieve and carrier profiles (1, 7) are connected to one another by ultrasonic welding.

10. Slot sieve according to any one of the aforementioned claims, **characterised in that** narrower lamellar intermediate webs (13), which are held by the carrier profiles (1, 7) and form a sieve slot (3) with the respective adjacent sieve profile (1), are arranged between the sieve profiles (1).

11. Slot sieve according to claim 10, **characterised in that** the intermediate webs (13) are configured as flat metal sheets, the narrow longitudinal sides (14) of which are located in a plane with the slot sides (5) of the sieve profiles (1).

## Revendications

1. Tamis à fente comprenant
- une pluralité de profilés de tamis (1) disposées les unes à côtés des autres, qui forment une fente de tamis (3) entre leurs côtés longitudinaux, et
- au moins deux, de préférence, plusieurs, profilés de support (7), s'étendant perpendiculairement par rapport aux profilés de tamis (1), sur lesquelles sont fixées les profilés de tamis (1),
**caractérisé en ce que**
- les profilés de support (7) sont disposées ensemble dans des rainures d'admission (8) alignées de telle sorte que les côtés externes (9), faisant face aux profilés de tamis (1), des profilés de support (7) se situent dans un plan avec la fente, ou avec la face inférieure (5, 6) lui faisant face des profilés de tamis (1), et
- les profilés de tamis (1) présentent, chacune, une section transversale en forme de trapèze au moins dans leur zone de profilé orientée vers la fente de tamis (3), leurs côtés de base (4) larges formant le côté de la fente de chaque profilé de tamis (1).

2. Tamis à fente selon la revendication 1 **caractérisé en ce que** les côtés externes des profilés de tamis (1) sont disposés, sans discontinuité, avec les côtés des fentes (5) des profilés de tamis (1).

3. Tamis à fente selon l'une des revendications précitées **caractérisé en ce que** les profilés de support (7) sont conçues, chacune, rectangulaires planes ou triangulaires dans leur section transversale, l'une d'entre elles formant le côté externe (9) du profilé de support (7) par son côté large.

4. Tamis à fente selon l'une des revendications précitées **caractérisé en ce que** la largeur minimale des fentes du tamis (3) s'élève, chaque fois, à environ 1 µm.

5. Tamis à fente selon l'une des revendications précitées **caractérisé en ce que** la largeur maximale des fentes du tamis (3) s'élève, chaque fois, à environ 10 mm.

6. Tamis à fente selon l'une des revendications précitées **caractérisé en ce que** les profilés de tamis et de support (1, 7) sont, chacune, conçues comme des profilés de fil constitué de métal.

7. Tamis à fente selon la revendication 6 **caractérisé en ce que** les profilés de tamis et de support (1, 7) sont reliées ensemble par une soudage à la molette.

8. Tamis à fente selon l'une des revendications précitées **caractérisé en ce que** les profilés de tamis et de support (1, 7) sont conçues sous forme de profilés en matière synthétique.

9. Tamis à fente selon la revendication 8 **caractérisé en ce que** les profilés de tamis et de support (1, 7) sont reliées ensemble par une soudure par ultrasons.

10. Tamis à fente selon l'une des revendications précitées **caractérisé en ce qu'**entre les profilés de tamis (1), des barres intermédiaires, plus minces, en forme de profilés, soient disposées, qui sont maintenues par les profilés de support (1, 7) et forment, chaque fois, avec la profilé de tamis (1) voisine, une fente de tamis (3).

11. Tamis à fente selon la revendication 10 **caractérisé en ce que** les barres intermédiaires (13) sont conçues comme des feuilles de tôle dont les côtés longitudinaux (14) minces sont situés dans un plan avec les côtés de fentes (5) des profilés de tamis (1).
